# EUROPEAN PATENT SPECIFICATION

(11) **EP 2 713 769 B1**
(45) Date of publication and mention of the grant of the patent: **14.09.2016**
(21) Application number: 12790221.1
(22) Date of filing: 14.05.2012
(51) Int. Cl.: A23B 9/26, A23L 3/3517, A23L 3/3508

(54) **ANIMAL FEED ADDITIVE EFFECTIVE AS PRESERVATIVE**
ALS KONSERVIERUNGSMITTEL WIRKENDER TIERFUTTERZUSATZ
ADDITIF D'ALIMENT POUR ANIMAUX EFFICACE COMME CONSERVATEUR

(30) Priority: 24.05.2011 SE 1100413
(43) Date of publication of application: 09.04.2014
(73) Proprietor: Perstorp AB, 284 80 Perstorp (SE)
(72) Inventor: REHNSTRÖM, Johan, SE-263 77 Mölle (SE)
(74) Representative: Hoffmann Eitle
(86) International application number: PCT/SE2012/000073
(87) International publication number: WO 2012/161633

(56) References cited:
- EP-A1- 2 294 924
- WO-A2-2010/106488
- CA-A1- 1 168 078
- CN-A- 101 691 525
- SU-A1- 701 631
- US-A- 2 005 371
- US-A- 3 394 009
- US-A- 4 847 067
- US-A1- 2004 170 729
- US-B1- 6 183 794

## Description

The present invention refers to a novel animal feed additive effective as preservative, said feed additive comprises as active ingredients propionic acid, glyceryl propionates and optionally a minor amount of an alkali metal salt. In a further aspect the present invention refers to a method of producing said animal feed additive and in yet a further aspect to the use thereof as mould inhibitor in animal feedstuffs.

Due to steady changes in the ecology resulting from the introduction of more intensive methods of farming, and increasing use of chemicals which alter the microbial populations of soils and plants, the growth of toxin producing and infectious moulds in both human foods and animal feedstuffs has during recent years become a matter of increasing concern from the view point of both animal and human welfare. Considerable research has been devoted to the development of methods for inhibiting mould growth which typically are activated directly in proportion to the moisture content of the feedstuff, that is the greater the moisture content, the greater the hazard of mould growth.

Propionic acid is today widely used as an effective and well proven preservative in animal feedstuffs. However, propionic acid is, as being corrosive to skin and metals and having a flash point of less than 55°C, classified to be labelled as corrosive and flammable according to for instance ADR transport regulations, thus limiting the possibility for end-users to store and transport the material. An established way to avoid this classification is to, at least partly, neutralise the acid by addition of for instance an alkaline compound, such as ammonia, and/or by addition of vapour pressure depressants. The process require costly installations for handling the alkaline material.

EP 2 294 924 A1 discloses use of a 1-monopropionine compound and its isomer 3-monopropionine as preserving agents for animal feed, grains and animal-origin flours, with the object to reduce the contamination by deleterious fungi, yeasts and bacteriae (especially Salmonella spp. and Coli spp.) in animal feed, grains and animal-origin flours, and consequently enhance the growth of the animal by means of practically contaminant-free food.

WO 2010/106488 A2 discloses compositions containing C₁ to C₇ fatty acid monoglycerides in percentages between 10% and 90% and glycerol between 10 and 90% by weight (calculated on the total composition weight) as antibacterials and anti-mould agents to be added to cereals, feed, and to general foodstuffs and drinking water intended for the feeding of animals.

It has now quite unexpectedly been found that a mixture of glyceryl propionates and propionic acid exhibits properties making said classification redundant, while preservative properties, such as mould inhibition, are essentially the same as for pure propionic acid. The present invention accordingly provides a feed additive that is substantially non-corrosive and has a volatility and a flash point being outside necessary transport classifications. The novel animal feed additive comprises 30-80%, such as 40-60% or 35-65%, by weight of propionic acid, 20-70%, such 30-50% or 35-55%, by weight of glyceryl propionates, less than 4%, such as less than 2% such as 0.5-1%, by weight of glycerol, and optionally 1-10%, such as 1-5%, by weight of an alkali metal salt, preferably a formate, such as potassium or sodium formate balance to 100% by weight being water, such as reaction water and water emanating from the water content of used raw materials. Said glyceryl propionates are present as a mixture of mono, di and tripropionates in a ratio of 10-30% by weight of glyceryl monopropionate, 40-70% by weight of glyceryl dipropionate and 10-30% by weight of glyceryl tripropionate, balance being 100% by weight

In a further aspect the present invention provides a method of producing said animal feed additive by subjecting a mixture comprising 70-90 % by weight of propionic acid and 10-30 % by weight of glycerol to reaction at a temperature of 50-70°C until a reaction equilibrium is obtained. Said reaction is optionally performed in presence of an acidic catalyst, such as sulphuric acid, in an amount of for instance 0.05-0.5 % by weight calculated on total amount of reactants. Said method may also optionally comprise the step of diluting yielded reaction mixture with an additional amount of propionic acid to obtain a composition comprising propionic acid and glyceryl propionates in amounts as previously disclosed, and/or the step of admixing a said alkali metal salt. Used acidic catalyst is suitably neutralised by addition of a stoechiometric amount of an alkaline compound, such as ammonium hydroxide and/or an alkali metal hydroxide. The reaction mixture or composition thus obtained is suitably used as mould inhibiting additive in animal feedstuffs.

The animal feed additive according to embodiments of the present invention can, of course, be diluted to any suitable concentration of active components by addition of for instance water, formic acid, propionic acid, butyric acid and/or other mould inhibiting compounds. The feed additive can, of course, also be supplemented by addition of other feed additives, preservatives, nutrients and pharmaceutical preparations, such as compatible antibiotics and vitamins.

The following preferred specific embodiments are to be construed as merely illustrative and not limitative of the remainder of the disclosure in any way whatsoever. In the following, Examples 1-3 refer to preparation of animal feed additives according to embodiments of the present invention and Examples 4-7 to evaluation of yielded products in comparison with commercially available propionic acid based feed additives. Evaluation results are given in enclosed Tables 1-3.

### Example 1

70 kg of propionic acid, 30 kg of glycerol and 200 g of sulphuric acid, as catalyst, were mixed and heated to 60°C in a reaction vessel. A reaction equilibrium was reached after 8 hrs. and yielded reaction mixture was cooled to room temperature and, a to said sulphuric acid stoechiometric amount of, ammonium hydroxide was added.

Yielded reaction mixture exhibited following composition:

| | |
|---|---|
| Propionic acid | 61.3 % by weight |
| Glyceryl monopropionate | 6.2 % by weight |
| Glyceryl dipropionate | 15.7 % by weight |
| Glyceryl tripropionate | 7.3 % by weight |
| Glycerol | 0.5 % by weight |

### Example 2

Example 1 was repeated with the difference that 2% by weight of sodium formate finally was admixed into yielded reaction mixture.

### Example 3

Example 1 was repeated with the difference that 3% by weight of sodium formate finally was admixed into yielded reaction mixture.

### Example 4

The product obtained in Example 1 was sprayed, at application rates equivalent to 35, 46 and 59% of recommended application rates* for aerobic preservation of moist grain with propionic acid, onto barley having a moisture content of 34% and the sprayed grain samples were stored in glass jars simulating normal storage conditions for grain preservation. The product of Example 1 was compared with pure propionic acid and Lupro-Grain^{®} (BASF, Germany) dosed in relation to propionic acid content. The treated samples were stored in glass jars simulating normal storage conditions for grain preservation at 18-22°C. Growth of mould was observed weekly and noted. The tests were performed by Swedish University of Agricultural Sciences and assessed with the following scoring system.
0 = no visible mould growth
1 = 1-3 small mould colonies visible
2 = visible mould growth on < 10% of the surface
3 = visible mould growth on 10-30% of the surface
4 = visible mould growth on 30-50% of the surface
5 = visible mould growth on >50% of the surface
and is given in Table 1 as average value for 15 samples/product.

* Recommended application rate were calculated as follows:
Recommended application rate (ml/kg moist grain) = (moisture content x 0.375) - 1.125 Ekström, N., Thyselius, L. Johansson, S. & Thomke, S., 1973, Syrabehandling av spannmal. Dosering, fodervärde, ekonomi (Acid Treatment of Grain. Application, Nutrative Quality and Economy), JTI-meddelande #352, JTI (www.jti.se), Uppsala, Sweden (in Swedish with English summary).

### Example 5

30 g of the product obtained in Example 2 was weighed into an open 100 ml beaker and stored for 65 days at room temperature. Remaining sample in calculated as percent by weight was determined by weighing at intervals. A comparative sample of Lupro-Grain^{®} were tested under the same conditions. The result is given in Table 2.

### Example 6

Corrosion of steel panels was evaluated for products according to Example 1, 2 and 3. The corrosion test was performed according to UN Test Methods Part III Section 37. The result, as weight loss of the steel panels expressed as percent by weight and intrusion depth as µm, is given in Table 3.

### Example 7

Skin Irritation tests were performed according to OECD Guideline No 404, "Acute Dermal Irritation/Corrosion", April 2002, and evaluated according to Commission Directive 2001/59/EC. The result of tests using the product obtained in Example 1 gave that said product is classified as non-irritant to the skin.

**Table 1**

| | Appl. rate 35 % | | | Appl. rate 46 % | | | Appl. rate 59 % | | |
|---|---|---|---|---|---|---|---|---|---|
| | PA | LG | Ex. 1 | PA | LG | Ex. 1 | PA | LG | Ex. 1 |
| 28 days | 1.3 | 3.8 | 1.8 | 0 | 0 | 0 | 0 | 0 | 0 |
| 56 days | 4.0 | 5.0 | 4.5 | 1.0 | 1.8 | 0.3 | 0 | 0 | 0 |
| 84 days | 5.0 | 5.0 | 5.0 | 2.5 | 2.8 | 0.3 | 0 | 0 | 0 |
| 112 days | 5.0 | 5.0 | 5.0 | 4.3 | 4.3 | 0.3 | 0 | 0 | 0 |

| | | | | | | | | | |
|---|---|---|---|---|---|---|---|---|---|
| PA = Propionic acid LG = Lupro-Grain^{®} Ex. 1 = Product of Example 1 | | | | | | | | | |

**Table 2**

| | Example 2, remain % w/w | Lupro-Grain^{®}, remain % w/w |
|---|---|---|
| 1 day | 98.3 | 96.7 |
| 2 days | 92.5 | 88.2 |
| 5 days | 82.4 | 70.9 |
| 9 days | 73.9 | 53.3 |
| 14 days | 68.1 | 35.5 |
| 27 days | 66.0 | 16.4 |
| 37 days | 63.9 | 4.9 |
| 65 days | 62.2 | 0.1 |

**Table 3**

| | Weight loss, % w/w | Intrusion depth, µm |
|---|---|---|
| Example 1 - Panel 1 | 1.76 | |
| Example 1 - Panel 2 | 2.50 | 250 |
| Example 1 - Panel 3 | 3.84 | |
| Example 2 - Panel 1 | 1.64 | |
| Example 2 - Panel 2 | 1.64 | 80 |
| Example 2 - Panel 3 | 0.64 | |
| Example 3 - Panel 1 | 1.49 | |
| Example 3 - Panel 2 | 1.45 | < 50 |
| Example 3 - Panel 3 | 0.37 | |

## Claims

1. An animal feed additive effective as preservative
**characterised in, that** it comprises 30-80% by weight of propionic acid, 20-70% by weight of glyceryl propionates and less than 4% by weight of glycerol, balance to 100% by weight being water and that said glyceryl propionates comprise 10-30% by weight of glyceryl monopropionate, 40-70% by weight of glyceryl dipropionate and 10-30% by weight of glyceryl tripropionate, balance being 100 % by weight.

2. An animal feed additive according to Claim 1
**characterised in, that** it comprises 40-60%, by weight of propionic acid, 30-50% by weight of glyceryl propionates.

3. An animal feed additive according to Claim 1
**characterised in, that** it comprises 35-65%, by weight of propionic acid, 35-55% by weight of glyceryl propionates.

4. An animal feed additive according to any of the Claims 1-3
**characterised in, that** it comprises less than 2% by weight of glycerol.

5. An animal feed additive according to any of the Claims 1-3
**characterised in, that** it comprises 0.5-1%, by weight of glycerol.

6. An animal feed additive according to any of the Claims 1-5
**characterised in, that** it additionally comprises at least one alkali metal salt added in an amount of 1-10% by weight.

7. An animal feed additive according to any of the Claims 1-6
**characterised in, that** it comprises at least one alkali metal salt added in an amount of 1-5% by weight.

8. An animal feed additive according to Claim 6 or 7
**characterised in, that** said alkali metal salt is potassium and/or sodium formate.

9. An animal feed additive according to any of the Claims 1-8
**characterised in, that** it is diluted with water, formic acid, propionic acid and/or butyric acid.

10. An animal feed additive according to any of the Claims 1-9
**characterised in, that** it is supplemented by addition of a further feed additive, a preservative, a nutrient and/or a pharmaceutical preparation.

11. An animal feed additive according to Claim 10
**characterised in, that** said pharmaceutical preparation comprises with said animal feed additive compatible antibiotics and/or vitamins.

12. Use of a feed additive according to any of the Claims 1-11 as mould inhibitor.

## Patentansprüche

1. Tierfutterzusatz, der als Konservierungsmittel wirksam ist, **dadurch gekennzeichnet, dass** er 30 bis 80 Gew.% Propionsäure, 20 bis 70 Gew.% Glycerylpropionate und weniger als 4 Gew.% Glycerin umfasst, wobei der Rest auf 100 Gew.% Wasser ist, und dass die Glycerylpropionate 10 bis 30 Gew.% Glycerylmonopropionat, 40 bis 70 Gew.% Glyceryldipropionat und 10 bis 30 Gew.% Glyceryltripropionat umfassen, wobei der Rest 100 Gew.% ist.

2. Tierfutterzusatz gemäss Anspruch 1, **dadurch gekennzeichnet, dass** er 40 bis 60 Gew.% Propionsäure und 30 bis 50 Gew.% Glycerylpropionate umfasst.

3. Tierfutterzusatz gemäss Anspruch 1, **dadurch gekennzeichnet, dass** er 35 bis 65 Gew.% Propionsäure und 35 bis 55 Gew.% Glycerylpropionate umfasst.

4. Tierfutterzusatz gemäss einem der Ansprüche 1 bis 3, **dadurch gekennzeichnet, dass** er weniger als 2 Gew.% Glycerin umfasst.

5. Tierfutterzusatz gemäss einem der Ansprüche 1 bis 3, **dadurch gekennzeichnet, dass** er 0,5 bis 1 Gew.% Glycerin umfasst.

6. Tierfutterzusatz gemäss einem der Ansprüche 1 bis 5, **dadurch gekennzeichnet, dass** er zusätzlich zumindest ein Alkalimetallsalz umfasst, das in einer Menge von 1 bis 10 Gew.% zugegeben wird.

7. Tierfutterzusatz gemäss einem der Ansprüche 1 bis 6, **dadurch gekennzeichnet, dass** er zumindest ein Alkalimetallsalz umfasst, das in einer Menge von 1 bis 5 Gew.% zugegeben wird.

8. Tierfutterzusatz gemäss Anspruch 6 oder 7, **dadurch gekennzeichnet, dass** das Alkalimetallsalz Kalium- und/oder Natriumformiat ist.

9. Tierfutterzusatz gemäss einem der Ansprüche 1 bis 8, **dadurch gekennzeichnet, dass** er mit Wasser, Ameisensäure, Propionsäure und/oder Buttersäure verdünnt ist.

10. Tierfutterzusatz gemäss einem der Ansprüche 1 bis 9, **dadurch gekennzeichnet, dass** er durch Zugabe eines weiteren Tierfutterzusatzes, eines Konservierungsmittels, eines Nährstoffs und/oder einer pharmazeutischen Zubereitung ergänzt ist.

11. Tierfutterzusatz gemäss Anspruch 10, **dadurch gekennzeichnet, dass** die pharmazeutische Zubereitung mit diesem Tierfutterzusatz kompatible Antibiotika und/oder Vitamine umfasst.

12. Verwendung eines Tierfutterzusatzes gemäss einem der Ansprüche 1 bis 11 als Schimmelinhibitor.

## Revendications

1. Additif alimentaire pour animal efficace comme conservateur,
**caractérisé en ce qu'**il comprend 30 à 80 % en poids d'acide propionique, 20 à 70 % en poids de propionates de glycéryle et moins de 4 % en poids de glycérol, le reste jusqu'à 100 % en poids étant de l'eau et **en ce que** lesdits propionates de glycéryle comprennent 10 à 30 % en poids de monopropionate de glycéryle, 40 à 70 % en poids de dipropionate de glycéryle et 10 à 30 % en poids de triproprionate de glycéryle, le reste étant de 100 % en poids.

2. Additif alimentaire pour animal selon la revendication 1
**caractérisé en ce qu'**il comprend 40 à 60 %, en poids d'acide propionique, 30 à 50 % en poids de propionates de glycéryle.

3. Additif alimentaire pour animal selon la revendication 1
**caractérisé en ce qu'**il comprend 35 à 65 % en poids d'acide propionique, 35 à 55 % en poids de propionates de glycéryle.

4. Additif alimentaire pour animal selon l'une quelconque des revendications 1 à 3
**caractérisé en ce qu'**il comprend moins de 2 % en poids de glycérol.

5. Additif alimentaire pour animal selon l'une quelconque des revendications 1 à 3
**caractérisé en ce qu'**il comprend 0,5 à 1 %, en poids de glycérol.

6. Additif alimentaire pour animal selon l'une quelconque des revendications 1 à 5
**caractérisé en ce qu'**il comprend de plus au moins un sel de métal alcalin ajouté en une quantité de 1 à 10 % en poids.

7. Additif alimentaire pour animal selon l'une quelconque des revendications 1 à 6
**caractérisé en ce qu'**il comprend au moins un sel de métal alcalin ajouté en une quantité de 1 à 5 % en poids.

8. Additif alimentaire pour animal selon l'une quelconque des revendications 6 ou 7
**caractérisé en ce que** ledit sel de métal alcalin est du formate de potassium et/ou de sodium.

9. Additif alimentaire pour animal selon l'une quelconque des revendications 1 à 8
**caractérisé en ce qu'**il est dilué avec de l'eau, de l'acide formique, de l'acide propionique et/ou de l'acide butyrique.

10. Additif alimentaire pour animal selon l'une quelconque des revendications 1 à 9
**caractérisé en ce qu'**il est complété par l'addition d'un autre additif alimentaire, d'un conservateur, d'un nutriment et/ou d'une préparation pharmaceutique.

11. Additif alimentaire pour animal selon la revendication 10
**caractérisé en ce que** ladite préparation pharmaceutique comprend avec ledit additif alimentaire pour animal des antibiotiques et/ou vitamines compatibles.

12. Utilisation d'un additif alimentaire selon l'une quelconque des revendications 1 à 11 comme inhibiteur de moisissures.
